# EUROPÄISCHE PATENTSCHRIFT

(11) **EP 2 943 776 B1**
(45) Veröffentlichungstag und Bekanntmachung des Hinweises auf die Patenterteilung: **22.05.2019**
(21) Anmeldenummer: 14700571.4
(22) Anmeldetag: 09.01.2014
(51) Int. Cl.: G01N 21/64

(54) **VERFAHREN ZUM RÄUMLICH HOCHAUFGELÖSTEN ABBILDEN EINER EINEN LUMINOPHOR AUFWEISENDEN STRUKTUR EINER PROBE**
METHOD FOR SPATIALLY HIGH-RESOLVED IMAGING OF A STRUCTURE OF A SAMPLE THAT HAS A LUMINOPHORE
PROCÉDÉ DE REPRÉSENTATION SPATIALE HAUTE RÉSOLUTION D'UNE STRUCTURE D'UN ÉCHANTILLON MUNIE D'UN LUMINOPHORE

(30) Priorität: 09.01.2013 DE 102013100172
(43) Veröffentlichungstag der Anmeldung: 18.11.2015
(73) Patentinhaber: Max-Planck-Gesellschaft zur Förderung der Wissenschaften e.V., 80539 München (DE)
(72) Erfinder: HELL, Stefan W., 37085 Göttingen (DE)
(74) Vertreter: REHBERG HÜPPE + PARTNER
(86) Internationale Anmeldenummer: PCT/EP2014/050272
(87) Internationale Veröffentlichungsnummer: WO 2014/108455

(56) Entgegenhaltungen:
- EP-A1- 2 253 635
- T. GROTJOHANN ET AL: "rsEGFP2 enables fast RESOLFT nanoscopy of living cells", ELIFE, Bd. 1, Nr. 0, 1. Januar 2012 (2012-01-01), Seiten e00248-e00248, XP055115522, DOI: 10.7554/eLife.00248

## Beschreibung

### TECHNISCHES GEBIET DER ERFINDUNG

Die Erfindung bezieht sich auf ein Verfahren zum räumlich hochaufgelösten Abbilden einer einen Luminophor aufweisenden Struktur einer Probe, wobei die Probe in einem Messbereich mit Lumineszenzanregungslicht beaufschlagt wird, das den Luminophor aus einem anregbaren elektronischen Grundzustand in einen angeregten lumineszierenden Zustand anregt, wobei die Probe in dem Messbereich mit einer ein lokales Minimum aufweisenden Intensitätsverteilung von Lumineszenzabregungslicht beaufschlagt wird, das den Luminophor aus dem angeregten lumineszierenden Zustand in den anregbaren elektronischen Grundzustand zurückbringt, wobei aus dem Messbereich emittiertes Lumineszenzlicht registriert wird und wobei das registrierte Lumineszenzlicht der Position des lokalen Minimums in der Probe zugeordnet wird.

Bei einem solchen Verfahren ist die Intensität des aus dem Messbereich emittierten Lumineszenzlichts ein Maß für die Konzentration des Luminophors an der Position des lokalen Minimums in der Probe. Durch Abscannen der Probe mit dem lokalen Minimum unter Wiederholung der oben genannten Schritte für jede Position des lokalen Minimums wird die Verteilung des Luminophors in der Probe erfasst und so die mit dem Luminophor markierte Struktur abgebildet.

Mit dem Begriff "Luminophor" wird hier jede Substanz bezeichnet, von der Lumineszenzlicht als Messsignal erhältlich ist, wenn sie sich in einem angeregten lumineszierenden Zustand befindet. Insbesondere fallen hierunter Fluoreszenzfarbstoffe. Der der Emission des Lumineszenzlichts zugrunde liegende Vorgang muss aber keine Fluoreszenz sein. Die interessierende Struktur der Probe kann den Luminophor von sich aus aufweisen, d. h. autolumineszent sein. Die interessierende Struktur der Probe kann jedoch auch mit dem Luminophor künstlich markiert sein. Die künstliche Markierung der Struktur mit dem Luminophor kann z. B. durch sogenannte Antikörperfärbung, d. h. durch Ankoppeln des Luminophors über eine Immunreaktion, oder durch eine gentechnische Veränderung vorgenommen werden, die zu einer gemeinsamen Exprimierung des Luminophors mit der interessierenden Struktur führt.

Wenn hier von einem Zustand, beispielsweise einem anregbaren elektronischen Grundzustand oder einem angeregten lumineszierenden Zustand des Luminophors die Rede ist, so handelt es sich um einen elektronischen Zustand der zur Lumineszenz fähigen kleinsten Einheit des Luminophors, d. h. eines Moleküls, eines Komplexes, einer Fehlstelle, eines Quantum Dot oder dergleichen.

Wenn hier von einem lokalen Minimum einer Intensitätsverteilung von Licht, beispielsweise des Lumineszenzabregungslicht, die Rede ist, so ist hiermit insbesondere eine durch Interferenz erzeugte Nullstelle der Intensitätsverteilung gemeint. Dabei mag es sich um eine echte Nullstelle handeln, in der die Intensität des Lichts tatsächlich auf Null zurückgeht, oder aber um eine solche, in der die Intensität des Lichts mangels idealer optischer Verhältnisse nur im Wesentlichen auf Null zurückgeht. Wenn hier von Abmessungen eines lokalen Minimums die Rede ist, so beziehen sich diese Abmessungen insbesondere auf die Abmessungen des Volumens, in dem das jeweilige Licht den mit ihm angestrengten Effekt, beispielsweise den mit ihm angeregten Übergang, nicht bis zur Sättigung herbeiführt.

### STAND DER TECHNIK

Ein Verfahren zum räumlich hochaufgelösten Abbilden einer einen Luminophor aufweisenden Struktur einer Probe, das die oben angegebenen Schritte des Oberbegriffs des unabhängigen Patentanspruchs 1 umfasst, ist als STED (Stimulated Emission Depletion)-Rasterfluoreszenzlichtmikroskopie bekannt. Die Probe wird in dem Messbereich zunächst mit dem Lumineszenzanregungslicht beaufschlagt, das den Luminophor aus dem anregbaren elektronischen Grundzustand heraus in den angeregten lumineszierenden Zustand anregt. Dann wird die Probe in dem Messbereich mit einer ein lokales Minimum aufweisenden Intensitätsverteilung von Lumineszenzabregungslicht in Form von Emissionsstimulationslicht beaufschlagt, das den Luminophor zur Emission von Licht mit der Wellenlänge des Emissionsstimulationslichts, d. h. mit einer anderen Wellenlänge als derjenigen des Lumineszenzlichts stimuliert und damit wieder in seinen Grundzustand abgeregt. Wenn das Lumineszenzabregungslicht den Luminophor aus dem angeregten lumineszierenden Zustand überall außerhalb des lokalen Minimums durch stimulierte Emission wieder abgeregt hat, kann anschließend aus dem Messbereich emittiertes Lumineszenzlicht nur aus dem lokalen Minimum der Intensitätsverteilung des Lumineszenzabregungsslichts stammen und damit der Position des lokalen Minimums in der Probe zugeordnet werden.

Bei dem unter dem Stichwort STED bekannten Verfahren wird auch praktisch eine sehr hohe Ortsauflösung mit hohem Kontrast beim Abbilden einer mit dem Luminophor markierten Struktur einer Probe erreicht. Dabei wird der Luminophor jedoch erheblich photochemisch belastet und neigt daher stark zum Bleichen. Ursache ist, dass das Lumineszenzabregungslicht, das zum Einengen des lokalen Minimums in Form einer Nullstelle seiner Intensitätsverteilung mit hoher absoluter Intensität aufgebracht werden muss, den bereits in seinem angeregten lumineszierenden Zustand befindlichen Luminophor beaufschlagt. Daher sind neben der gewünschten stimulierten Emission, die den Luminophor in seinen Grundzustand zurückführt, auch andere Vorgänge, insbesondere weitergehende und zum Bleichen führende elektronische Anregungen des Luminophors, nicht unwahrscheinlich. Auch erneute Anregungen des durch stimulierte Emission zunächst abgeregten Luminophors können durch das eigentlich zur Lumineszenzabregung vorgesehene Licht auftreten.

Ein weiteres Verfahren zum räumlich hochaufgelösten Abbilden einer einen Luminophor aufweisenden Struktur einer Probe ist als GSD (Ground State Depletion)-Rasterfluoreszenzlichtmikroskopie bekannt. Bei diesem bekannten Verfahren wird der Luminophor, bevor er mit Lumineszenzanregungslicht beaufschlagt wird, mit Lumineszenzverhinderungslicht beaufschlagt, das eine Intensitätsverteilung mit einem lokalen Minimum aufweist. Das Lumineszenzverhinderungslicht überführt den Luminophor in einen Dunkelzustand, z. B. einen langlebigen Triplettzustand, aus dem heraus er mit dem Lumineszenzanregungslicht nicht in einen lumineszierenden Zustand angeregt wird. Überall außerhalb des lokalen Minimums der Intensitätsverteilung des Lumineszenzverhinderungslichts erfolgt diese Überführung in den Dunkelzustand bis zur Sättigung. D. h., nur in dem lokalen Minimum der Intensitätsverteilung des Lumineszenzverhinderungslichts liegt der Luminophor nach der Beaufschlagung mit dem Lumineszenzverhinderungslicht noch in seinem elektronischen Grundzustand vor, aus dem heraus er mit dem Lumineszenzanregungslicht in den lumineszierenden Zustand angeregt wird. Nach der Anregung mit dem Lumineszenzanregungslicht von dem Luminophor emittiertes Lumineszenzlicht stammt deshalb aus dem lokalen Minimum der Intensitätsverteilung des Lumineszenzverhinderungslichts und kann daher der Position des lokalen Minimums in der Probe zugeordnet werden.

Auch bei dem unter dem Stichwort GSD bekannten Verfahren besteht eine erhebliche Gefahr des Bleichens des Luminophors, weil dieser in seinem langlebigen Dunkelzustand, in den er mit dem Lumineszenzverhinderungslichts überführt wird, in erhöhtem Maße zu chemischen Reaktionen beispielsweise mit Sauerstoff neigt und/oder der Gefahr ausgesetzt ist, dass er durch das Lumineszenzverhinderungslicht oder das Lumineszenzanregungslicht weiter angeregt wird, so dass es zu einem photochemischen Bleichen des Luminophors kommt.

EP2253635 offenbart Luminophore für STED, die eine hohe Photostabilität aufweisen.

Ein weiteres Verfahren zum räumlich hochaufgelösten Abbilden einer einen Luminophor aufweisenden Struktur einer Probe ist als Variante von RESOLFT (Reversible Saturable Optical Flurorescence Transitions)-Rasterfluoreszenzlichtmikroskopie bekannt, die von sogenannten schaltbaren Luminophoren Gebrauch macht. Diese Luminophore sind mit Hilfe von Lumineszenzverhinderungslichts aus einem ersten Konformationszustand, in dem sie als Luminophore wirksam sind, in einen zweiten Konformationszustand umschaltbar, in dem sie nicht als Luminophore wirksam sind, d. h. in dem sie zumindest mit Hilfe des Lumineszenzanregungslichts, welches in dem ersten Konformationszustand zur Anregung des lumineszierenden Zustands geeignet ist, nicht in einen lumineszierenden Zustand anregbar sind, in welchem sie das als Messsignal registrierte Lumineszenzlicht emittieren. Um dieses Umschalten überall außerhalb eines lokalen Minimums einer Intensitätsverteilung des Lumineszenzverhinderungslichts bis zur Sättigung zu treiben, sind bei ausreichend langer Lebensdauer des zweiten Konformationszustands nur vergleichsweise geringe Lichtintensitäten erforderlich. Zudem besteht keine signifikante Gefahr, dass der in seinen anderen Konformationszustand überführte Luminophor aus diesem anderen Konformationszustand heraus bleicht, weil er in diesem Konformationszustand auf das Lumineszenzverhinderungslicht und das Lumineszenzanregungslicht nicht anspricht.

In der praktischen Umsetzung der RESOLFT-Rasterfluoreszenzlichtmikroskopie mit schaltbaren Luminophoren werden eine Ortsauflösung und ein Kontrast beobachtet, die hinter denjenigen bei der STED-Rasterfluoreszenzlichtmikroskopie zurückbleiben. Dies mag darauf zurückzuführen sein, dass auch dann, wenn das Umschalten des schaltbaren Luminophors in seinen nicht lumineszenzfähigen Konformationszustand bis zur Sättigung getrieben wird, immer noch ein merklicher Anteil des Luminophors in seinem lumineszenzfähigen Konformationszustand ist. T. Grotjohann et al: "rsEGFP2 enables fast RESOLFT nanoscopy of living cells", eLife 2012, 1: e00248 geben bei ihrer praktischen Umsetzung der RESOLFT-Rasterfluoreszenzlichtmikroskopie einen Schaltuntergrund von ungefähr 10% in dem lumineszenzfähigen Konformationszustand verbleibendem Luminophor an. Der Schaltuntergrund führt beugungsbegrenzte Komponenten in die aufgenommene Rohbilder ein. Zum Entfernen dieser Komponenten werden die Rohbilder unter der Annahme entfaltet, dass 10% einer beugungsbegrenzten Abbildungsfunktion auf die RESOLFT-Abbildungsfunktion addiert sind.

### AUFGABE DER ERFINDUNG

Der Erfindung liegt die Aufgabe zugrunde, ein Verfahren zum räumlich hochaufgelösten Abbilden einer einen Luminophor aufweisenden Struktur einer Probe aufzuzeigen, bei dem die hohe Ortsauflösung und der hohe Kontrast von STED-Rasterfluoreszenzlichtmikroskopie erreicht werden und bei dem der Luminophor dennoch einer geringeren Gefahr des photochemischen Bleichens ausgesetzt ist als bei allen bislang bekannten Verfahren der STED-Rasterfluoreszenzlichtmikroskopie.

### LÖSUNG

Die Aufgabe der Erfindung wird durch ein Verfahren mit den Merkmalen des unabhängigen Patentanspruchs 1 gelöst. Bevorzugte Ausführungsformen des erfindungsgemäßen Verfahrens sind in den abhängigen Patentansprüchen definiert.

### BESCHREIBUNG DER ERFINDUNG

Bei einem erfindungsgemäßen Verfahren zum räumlich hochaufgelösten Abbilden einer einen Luminophor aufweisenden Struktur einer Probe, werden alle für ein STED-rasterfluoreszenzlichtmikroskopisches Verfahren charakteristischen Schritte durchgeführt; d. h., bei dem erfindungsgemäßen Verfahren handelt es sich um ein spezielles Verfahren der STED-Rasterlumineszenzlichtmikroskopie: Die Probe wird in einem Messbereich mit Lumineszenzanregungslicht beaufschlagt, das den Luminophor aus einem anregbaren elektronischen Grundzustand in einen angeregten lumineszierenden Zustand anregt. Die Probe wird in dem Messbereich weiterhin mit einer ein lokales Minimum aufweisenden Intensitätsverteilung von Lumineszenzabregungslicht beaufschlagt, das den Luminophor aus dem angeregten lumineszierenden Zustand ohne Emission von Lumineszenzlicht in den anregbaren elektronischen Grundzustand zurückbringt. Aus dem Messbereich emittiertes Lumineszenzlicht wird registriert; und das registrierte Lumineszenzlicht wird der Position des lokalen Minimums in der Probe zugeordnet.

Bei dem erfindungsgemäßen Verfahren wird die Probe in dem Messbereich vor dem Beaufschlagen mit dem Lumineszenzanregungslicht zusätzlich mit einer Intensitätsverteilung von Anregungsverhinderungslicht beaufschlagt, das den Luminophor aus dem anregbaren elektronischen Grundzustand in einen Schutzzustand überführt. In diesem Schutzzustand ist der Luminophor vor elektronischen Anregungen durch das Lumineszenzanregungslicht und das Lumineszenzabregungslicht geschützt. Die Intensitätsverteilung des Anregungsverhinderungslichts weist ebenfalls ein lokales Minimum auf, das mit dem lokalen Minimum der Intensitätsverteilung des Lumineszenzabregungslichts überlappt.

Das erfindungsgemäße Verfahren umfasst damit auch die Schritte, wie sie bei einem RESOLFT-rasterfluoreszenzlichtmikroskopischen Verfahren angewandt werden, das von einem schaltbaren Luminophor Gebrauch macht. Bei dem erfindungsgemäßen Verfahren wird jedoch primär nicht versucht, die effektiv wirksame Punktabbildungsfunktion im Sinne einer erhöhten Ortsauflösung zu verbessern, indem zwei ortsauflösend wirksame Intensitätsverteilungen mit deckungsgleicher Nullstelle überlagert werden. Vielmehr wird bei dem erfindungsgemäßen Verfahren primär ausgenutzt, dass der Luminophor zum Beispiel bei einem RESOLFT-Verfahren mit schaltbarem Luminophor außerhalb des Minimums der Intensitätsverteilung des Anregungsverhinderungslichts in einen Zustand überführt wird, in dem er durch das Lumineszenzanregungslicht und das Lumineszenzabregungslicht nicht elektronisch anregbar ist. Dieser Zustand wird hier als Schutzzustand des Luminophors bezeichnet.

Selbst wenn das lokale Minimum der Intensitätsverteilung des Anregungsverhinderungslichts bei dem erfindungsgemäßen Verfahren weniger scharf lokalisiert, d. h. größer ist als das lokale Minimum der Intensitätsverteilung des Lumineszenzabregungslichts, so verhindert das Anregungsverhinderungslicht effektiv das Bleichen des Luminophors durch das Lumineszenzanregungslicht und das Lumineszenzabregungslicht dort, wo diese ihre höchste gemeinsame Intensität aufweisen. Diese höchste gemeinsame Intensität des Lumineszenzanregungslichts und des Lumineszenzabregungslichts liegt nicht unmittelbar angrenzend an das lokale Minimum der Intensitätsverteilung des Lumineszenzabregungslichts sondern in gewissem Abstand dazu vor. In diesem Abstand zu dem lokalen Minimum der Intensitätsverteilung des Lumineszenzabregungslichts ist aber auch bei einem etwas größeren lokalen Minimum der Intensitätsverteilung des Anregungsverhinderungslichts der Luminophor bis zur Sättigung in seinen Schutzzustand überführt und damit vor einer elektronischen Anregung und einem daraus resultierenden Bleichen durch die hohen gemeinsamen Intensitäten des Lumineszenzanregungslichts und des Lumineszenzabregungslichts geschützt.

Dort, wo mit der Intensitätsverteilung des Lumineszenzabregungslichts die hohe Ortsauflösung und letztlich auch der hohe Kontrast realisiert wird, nämlich direkt angrenzend an das lokale Minimum der Intensitätsverteilung des Lumineszenzabregungslichts, ist die absolute Intensität des Lumineszenzabregungslichts viel geringer als in größerer Entfernung zu dem lokalen Minimum. Dass der Luminophor hier zumindest zu wesentlichen Anteilen nicht in seinem Schutzzustand ist, erhöht daher das Risiko des Bleichens des Luminophors nicht wesentlich.

Bei dem erfindungsgemäßen Verfahren können demnach die hohe Ortsauflösung und der hohe Kontrast, die bei der STED-Rasterfluoreszenzlichtmikroskopie erreichbar sind, ohne die massive Gefahr des Bleichens des Luminophors realisiert werden, die für bisherige STED-Verfahren typisch ist. Hierfür ist es nicht erforderlich, dass das lokale Minimum der Intensitätsverteilung des Anregungsverhinderungslichts genauso klein ist wie das lokale Minimum des Lumineszenzabregungslichts. Damit ist es auch leichter, das lokale Minimum der Intensitätsverteilung des Anregungsverhinderungslichts mit dem lokalen Minimum der Intensitätsverteilung des Lumineszenzabregungslichts zur Überlappung zu bringen. D. h., ein gewisser Versatz zwischen den Zentren dieser Minima kann durch ein größeres lokales Minimum der Intensitätsverteilung des Anregungsverhinderungslichts kompensiert werden.

Es versteht sich, dass bei dem erfindungsgemäßen Verfahren das Lumineszenzanregungslicht, das Lumineszenzabregungslicht und das Anregungsverhinderungslicht unterschiedliche Wellenlängen aufweisen können. Dabei können die Wellenlängen in Bezug auf das Absorptionsspektrum des Luminophors so gewählt werden, dass der Luminophor mit dem jeweiligen Licht nur so wie vorgesehen überführt bzw. an- oder abgeregt wird und dabei keiner der anderen Übergänge angesprochen wird.

Bei dem erfindungsgemäßen Verfahren können das Lumineszenzabregungslicht und das Anregungsverhinderungslicht aber auch gleiche Wellenlängen aufweisen und gemeinsam auf die Probe aufgebracht werden. D. h. bei dem Lumineszenzabregungslicht und dem Anregungsverhinderungslicht kann es sich um dasselbe Licht handeln. So kann bei Verwendung eines bekannten schaltbaren fluoreszierenden Proteins, wie beispielsweise rsEGFP oder rsEGFP2, als Luminophor eine gemeinsame Wellenlänge für das Anregungsverhinderungslicht und das Lumineszenzabregungslicht so gewählt werden, dass das Licht den Luminophor außerhalb des Minimums seiner Intensitätsverteilung sowohl mit einer gewissen ersten Wahrscheinlichkeit durch Schalten in seinen nicht zur Lumineszenz fähigen Schutzzustand als auch mit einer gewissen zweiten Wahrscheinlichkeit durch Stimulieren von Emission an der Emission von Lumineszenzlicht hindert. Auch bei diesem Vorgehen ergibt sich gegenüber einem reinen STED-Verfahren, das sich nur stimulierter Emission zur Erhöhung der Ortsauflösung bedient, eine reduzierte Gefahr des Bleichens des Luminophors.

Bei dem erfindungsgemäßen Verfahren wird das Lumineszenzanregungslicht in aller Regel in Pulsen auf die Probe aufgebracht. Das Anregungsverhinderungslicht und das Lumineszenzabregungslicht können grundsätzlich auch kontinuierlich auf die Probe aufgebracht werden. Insbesondere wenn das Lumineszenzabregungslicht kontinuierlich aufgebracht wird, ist es vorteilhaft, das Lumineszenzlicht mit zeitlicher Auflösung nach jedem Puls des Lumineszenzanregungslichts zu registrieren, um Ortsauflösung und Kontrast zu maximieren, wie dies grundsätzlich aus der WO 2012/069076 A1 für ein STED-Verfahren bekannt ist.

Bei dem erfindungsgemäßen Verfahren kann das Anregungsverhinderungslicht den Luminophor mittels einer Konformationsänderung aus dem anregbaren elektronischen Grundzustand in den Schutzzustand überführen. D. h., bei dem Luminophor kann es sich, wie bereits angesprochen wurde, um einen sogenannten schaltbaren Luminophor handeln. Dabei müssen die Eigenschaften dieses schaltbaren Luminophors nicht so ideal sein, wie es für RESOLFT-Rasterfluoreszenzlichtmikroskopie erforderlich wäre, bei der die Ortsauflösung auf der Schaltbarkeit des Luminophors basiert. Bei dem erfindungsgemäßen Verfahren wird die Schaltbarkeit des Luminophors zumindest primär nicht für die Erhöhung der Ortsauflösung sondern für den Schutz des Luminophors vor den hohen gemeinsamen Intensitäten des Lumineszenzanregungslichts und des Lumineszenzabregungslichts genutzt. Dieser Schutz wird bereits dann im Wesentlichen erreicht, wenn der Luminophor mit dem Anregungsverhinderungslicht nicht vollständig, aber doch im Wesentlichen in seinen Schutzzustand überführt wird. Anders gesagt sind auch schaltbare Luminophore bei dem erfindungsgemäßen Verfahren einsetzbar, die bei einem RESOLFT-Verfahren auf der Basis schaltbarer Luminophore nicht sinnvoll einsetzbar wären.

Der mit dem Anregungsverhinderungslicht ausschaltbare Luminophor kann insbesondere ein schaltbares fluoreszierendes Protein sein.

Der mit dem Anregungsverhinderungslicht ausschaltbare Luminophor kann spontan aus seinem Schutzzustand in den anregbaren elektronischen Grundzustand zurückkehren. Wenn eine solche spontane Rückkehr nicht oder nur mit unzureichender Rückkehrrate auftritt, ist es sinnvoll, die Probe in dem Messbereich vor dem Beaufschlagen mit dem Anregungsverhinderungslicht mit einer Intensitätsverteilung von Anregungsermöglichungslicht zu beaufschlagen, das den Luminophor zumindest im Bereich des lokalen Minimums der Intensitätsverteilung des Lumineszenzabregungslichts definiert in den anregbaren elektronischen Grundzustand überführt. In aller Regel erfolgt diese Überführung in dem gesamten Messbereich, da sich die Intensitätsverteilung des Anregungsermöglichungslichts wegen der Beugungsgrenze nicht stärker fokussieren lässt.

Das erfindungsgemäße Verfahren ist jedoch nicht nur unter Verwendung schaltbarer Luminophore durchführbar. So kann das Anregungsverhinderungslicht den anregbaren elektronischen Grundzustand des Luminophors auch so stören, dass der Luminophor in dem Schutzzustand einen um mindestens einen Faktor 2 reduzierten Absorptionsquerschnitt für das Lumineszenzanregungslicht aufweist, um ihn in den Schutzzustand zu überführen. In diesem Fall ist der Schutzzustand der gestörte elektronische Grundzustand des Luminophors, in dem die Störung, insbesondere der sterischen Ordnung der Atome des Luminophors, seine Fähigkeit zur Wechselwirkung mit dem Lumineszenzanregungslicht und möglichst auch mit dem Lumineszenzabregungslicht signifikant reduziert. Eine solche Störung des elektronischen Grundzustands des Luminophors kann durch Übertragung von Bewegungsimpulsen und/oder Schwingungen herbeigeführt werden. Solche Bewegungsimpulse und/oder Schwingungen können von einer Stoß- oder Vibrationsrelaxation einer mit dem Anregungsverhinderungslicht angeregten Modulatoreinheit oder auch einer mit dem Anregungsverhinderungslicht angeregten cis-trans-Isomerisierung der Modulatoreinheit ausgehen. Die Modulatoreinheit kann ein Molekül oder eine chemische Gruppe sein, die räumlich und/oder chemisch an den Luminophor gekoppelt sein, um die gewünschte Bewegungsimpuls- und/oder Schwingungsübertragung sicherzustellen.

Die Störung des elektronischen Grundzustands des Luminophors, durch die er in den Schutzzustand überführt wird, kann auch als Erhöhung der Vibrationsenergie des Luminophors in seinem elektronischen Grundzustand interpretiert werden, wobei es sich jedoch nicht um einen Energiezustand im thermischen Gleichgewicht mit der Umgebung des Luminophors handelt. Vielmehr wird die Energie des Luminophors durch die von der Modulatoreinheit übertragenen Bewegungsimpulse und/oder Schwingungen gegenüber dem thermischen Gleichgewicht mit seiner Umgebung erhöht. Diese Störung des Grundzustands, die der gewünschten Überführung des Luminophors in seinen Schutzzustand entspricht, geht wieder verloren, sobald sich durch weitere molekulare Übertragungen von Bewegungsimpulsen und/oder Schwingungen wieder ein thermisches Gleichgewicht zwischen dem Luminophor und seiner Umgebung einstellt. Um den Schutzzustand in Form des gestörten elektronischen Grundzustands zu nutzen, muss das Lumineszenzanregungslicht und vorzugsweise auch das Lumineszenzabregungslicht noch während des Fortbestehens der Störung des elektronischen Grundzustands des Luminophors auf die Probe aufgebracht werden.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung unter Bezugnahme auf die beigefügten Zeichnungen weiter erläutert und beschrieben.
- **Fig.** 1: illustriert die Verfahrensschritte eines erfindungsgemäßen Verfahrens zum räumlich hochaufgelösten Abbilden einer einen Luminophor aufweisenden Struktur einer Probe; und
- **Fig. 2**: illustriert die Verhältnisse beim Beaufschlagen der Probe mit Lumineszenzabregungslicht im Schritt (c) gemäß Fig. 1.

### FIGURENBESCHREIBUNG

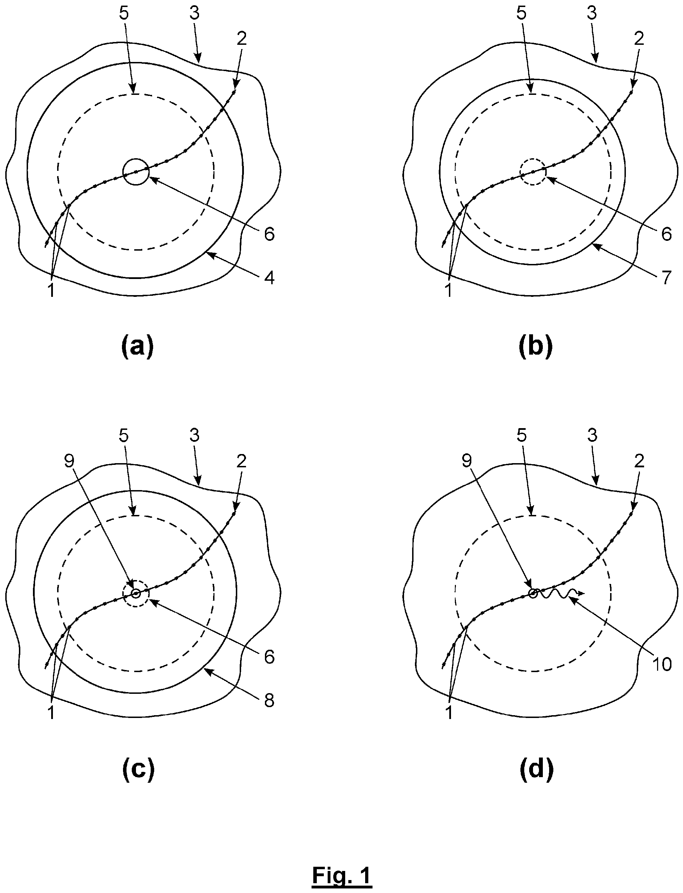

Bei einem erfindungsgemäßen Verfahren zum räumlich hochaufgelösten Abbilden einer einen Luminophor 1 aufweisenden Struktur 2 einer Probe 3 wird die Probe 3 gemäß **Fig. 1 (a)** mit Anregungsverhinderungslicht 4 beaufschlagt, das den Luminophor 1 in einen Schutzzustand überführt. Diese Überführung erfolgt über einen Messbereich 5 der Probe hinweg mit Ausnahme eines lokalen Minimums 6 der Intensitätsverteilung des Anregungsverhinderungslichts 4. In diesem lokalen Minimum 6 verbleibt der Luminophor 1 in einem zur Lumineszenz anregbaren elektronischen Grundzustand.

Gemäß **Fig. 1 (b)** wird die Probe 3 in dem gesamten Messbereich 5 einschließlich des lokalen Minimums 6 mit Lumineszenzanregungslicht 7 beaufschlagt, das den Luminophor 1, soweit er sich nicht in seinem Schutzzustand befindet, aus seinem elektronischen Grundzustand in einen angeregten lumineszierenden Zustand überführt. Dies bedeutet, dass nur der in dem Bereich des lokalen Minimums 6 des Anregungsverhinderungslichts 4 befindliche Luminophor 1 in den lumineszierenden Zustand angeregt wird.

Gemäß **Fig. 1 (c)** wird die Probe 3 in dem Messbereich 5 mit Lumineszenzabregungslicht 8 beaufschlagt, diesmal wieder mit Ausnahme eines lokalen Minimums 9 der Intensitätsverteilung des Lumineszenzabregungslichts 8, die mit dem lokalen Minimum 6 des Anregungsverhinderungslichts 4 gemäß Fig. 1 (a) überlappt. Das Lumineszenzabregungslicht 8 überführt den Luminophor 1 überall außerhalb des lokalen Minimums 9 seiner Intensitätsverteilung aus seinem angeregten lumineszierenden Zustand zurück in seinen elektronischen Grundzustand. Dabei ist das lokale Minimum 9 kleiner als das lokale Minimum 6. D. h., wo sich nach dem Schritt gemäß Fig. 1 (c) noch Luminophor 1 in seinem lumineszierenden Zustand befindet, hängt von der Lage des lokalen Minimums 9 ab.

Wenn anschließend gemäß **Fig. 1 (d)** Lumineszenzlicht 10 aus dem Messbereich 5 registriert wird, kann dieses der Position des lokalen Minimums 9 der Intensitätsverteilung des Lumineszenzabregungslichts 8 gemäß Fig. 1 (c) zugeordnet werden.

Durch Abtasten der Probe mit dem Messbereich 5 bzw. mit dem lokalen Minimum 9 wird die Konzentrationsverteilung des Luminophors 1 in der Probe 3 erfasst und so auch die Struktur 2 in der Probe abgebildet. Um dieses Scannen zu ermöglichen, muss der Luminophor nicht nur aus seinem angeregten lumineszierenden Zustand sondern auch aus seinem Schutzzustand schnell in seinen anregbaren elektronischen Grundzustand zurückkehren. Wenn dies in Bezug auf den Schutzzustand nicht zutrifft, kann vor der Wiederholung der Schritte gemäß Fig. 1 (a) bis (d) an der nächsten Position des Messbereichs 5 bzw. des lokalen Minimums 9 der Luminophor 1 in dem Messbereich 5 mit Anregungsermöglichungslicht beaufschlagt werden, das ihn aus seinem Schutzzustand definiert zurück in seinen anregbaren elektronischen Grundzustand überführt.

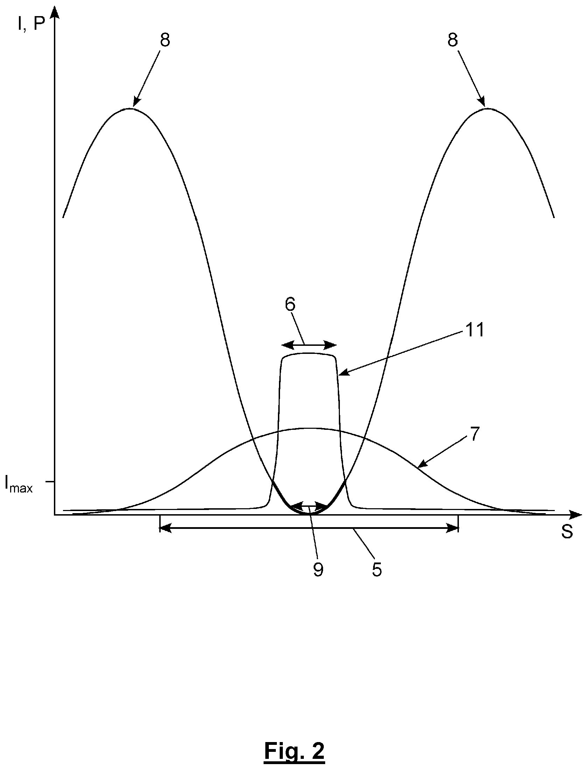

**Fig. 2** illustriert die Intensitätsverteilungen des Lumineszenzanregungslichts 7 und des Lumineszenzabregungslichts 8 sowie die Wahrscheinlichkeit 11, dass sich der Luminophor 1 nach der Beaufschlagung mit dem Anregungsverhinderungslicht 4 gemäß Fig. 1 (a) noch in seinem anregbaren elektronischen Grundzustand, d. h. nicht in seinem Schutzzustand befindet, in einem Schnitt durch den Messbereich 5. Überall außerhalb des lokalen Minimums 6 gemäß Fig. 1 (a) weist die Wahrscheinlichkeit 11 nur einen kleinen Wert auf, der nahe null liegt. D. h., nur innerhalb des lokalen Minimums 6 ist der Luminophor noch in seinem anregbaren elektronischen Grundzustand, und überall außerhalb des lokalen Minimums 6 befindet er sich höchstwahrscheinlich in seinem Schutzzustand. Die Intensitätsverteilungen des Lumineszenzanregungslichts 7 und des Lumineszenzabregungslichts 8 weisen ihre maximale gemeinsame Intensität außerhalb des lokalen Minimums 6 auf. D. h., die gemeinsame maximale Intensität trifft dort auf den Luminophor, wo er sich in seinem Schutzzustand befindet und entsprechend nicht photochemisch gebleicht werden kann. Innerhalb des lokalen Minimums 6, wo die Wahrscheinlichkeit 11 deutlich größer als null ist, wirkt neben dem Lumineszenzanregungslicht 7 nur eine geringe Intensität des Lumineszenzabregungslichts 8 auf den Luminophor ein, die einen weit unter dem absoluten Maximum dieser Intensität bleibenden Wert Iₘₐₓ nicht überschreitet. Diese geringe Intensität ist zwar für das STED-typische Einengen des lumineszierenden angeregten Zustand des Luminophors auf das lokale Minimum 9 ausreichend, aber nicht für das STED-typische Bleichen des Luminophors, das bei den hohen absoluten gemeinsamen Intensitäten des Lumineszenzanregungslichts 7 und des Lumineszenzabregungslichts 8 auftritt. So werden bei dem erfindungsgemäßen Verfahren zwar die hohe Ortsauflösung und der hohe Kontrast eines STED-Verfahrens erreicht, ohne jedoch die damit üblicherweise verbundene Gefahr des Bleichens des Luminophors in Kauf nehmen zu müssen.

Die hier gezeigten räumlichen Intensitätsverteilung des Anregungsverhinderungslichts 4 und des Lumineszenzabregungslichts 8 um die lokalen Minima 6, 9 sind nur beispielhaft. Diese Intensitätsverteilungen können jede beliebige Form in jeder Raumrichtung annehmen, wie sie auf dem Gebiet der STED-Rasterfluoreszenzlichtmikroskopie bekannt sind.

### BEZUGSZEICHENLISTE

- 1: Luminophor
- 2: Struktur
- 3: Probe
- 4: Anregungsverhinderungslicht
- 5: Messbereich
- 6: lokales Minimum
- 7: Lumineszenzanregungslicht
- 8: Lumineszenzabregungslicht
- 9: lokales Minimum
- 10: Lumineszenzlicht
- 11: Wahrscheinlichkeit

## Patentansprüche

1. Verfahren zum räumlich hochaufgelösten Abbilden einer einen Luminophor (1) aufweisenden Struktur (2) einer Probe (3),
- wobei die Probe (3) in einem Messbereich (5) mit Lumineszenzanregungslicht (7) beaufschlagt wird, das den Luminophor (1) aus einem anregbaren elektronischen Grundzustand in einen angeregten lumineszierenden Zustand anregt;
- wobei die Probe (3) in dem Messbereich (5) mit einer ein lokales Minimum (9) aufweisenden Intensitätsverteilung von Lumineszenzabregungslicht (8) beaufschlagt wird, das den Luminophor (1) aus dem angeregten lumineszierenden Zustand in den anregbaren elektronischen Grundzustand zurückbringt;
- wobei aus dem Messbereich (5) emittiertes Lumineszenzlicht (10) registriert wird und
- wobei das registrierte Lumineszenzlicht (10) der Position des lokalen Minimums (9) in der Probe (3) zugeordnet wird,
**dadurch gekennzeichnet, dass** die Probe (3) in dem Messbereich (5) vor dem Beaufschlagen mit dem Lumineszenzanregungslicht (7) mit einer Intensitätsverteilung von Anregungsverhinderungslicht (4) beaufschlagt wird, das den Luminophor (1) aus dem anregbaren elektronischen Grundzustand in einen Schutzzustand überführt, in welchem der Luminophor (1) vor elektronischen Anregungen durch das Lumineszenzanregungslicht (7) und das Lumineszenzabregungslicht (8) geschützt ist, wobei die Intensitätsverteilung des Anregungsverhinderungslichts (4) ein lokales Minimum (6) aufweist, das mit dem lokalen Minimum (9) der Intensitätsverteilung des Lumineszenzabregungslichts (8) überlappt.

2. Verfahren nach Anspruch 1, **dadurch gekennzeichnet, dass** das Lumineszenzanregungslicht (7), das Lumineszenzabregungslicht (8) und das Anregungsverhinderungslicht (4) unterschiedliche Wellenlängen aufweisen.

3. Verfahren nach Anspruch 1, **dadurch gekennzeichnet, dass** das Lumineszenzabregungslicht (8) und das Anregungsverhinderungslicht (4) gleiche Wellenlängen aufweisen.

4. Verfahren nach Anspruch 3, **dadurch gekennzeichnet, dass** das Lumineszenzabregungslicht (8) und das Anregungsverhinderungslicht (4) gemeinsam auf die Probe (3) aufgebracht werden.

5. Verfahren nach einem der vorhergehenden Ansprüche, **dadurch gekennzeichnet, dass** das Lumineszenzanregungslicht (7) in Pulsen auf die Probe (3) aufgebracht wird und dass das Anregungsverhinderungslicht (4) und das Lumineszenzabregungslicht (8) unabhängig voneinander in Pulsen oder kontinuierlich auch die Probe (3) aufgebracht werden.

6. Verfahren nach Anspruch 5, **dadurch gekennzeichnet, dass** das Lumineszenzlicht (10) mit zeitlicher Auflösung nach jedem Puls des Lumineszenzanregungslichts (7) registriert wird.

7. Verfahren nach einem der vorhergehenden Ansprüche, **dadurch gekennzeichnet, dass** das Anregungsverhinderungslicht (4) den Luminophor (1) mittels einer Konformationsänderung aus dem anregbaren elektronischen Grundzustand in den Schutzzustand überführt.

8. Verfahren nach einem der vorhergehenden Ansprüche, **dadurch gekennzeichnet, dass** der Luminophor (1) ein mit dem Anregungsverhinderungslicht (4) ausschaltbarer Luminophor (1) ist.

9. Verfahren nach einem der vorhergehenden Ansprüche, **dadurch gekennzeichnet, dass** der Luminophor (1) ein schaltbares fluoreszierendes Protein ist.

10. Verfahren nach einem der Ansprüche 7 bis 9, **dadurch gekennzeichnet, dass** die Probe (3) in dem Messbereich (5) vor dem Beaufschlagen mit dem Anregungsverhinderungslicht (4) mit einer Intensitätsverteilung von Anregungsermöglichungslicht beaufschlagt wird, das den Luminophor (1) zumindest im Bereich des lokalen Minimums (9) der Intensitätsverteilung des Lumineszenzabregungslichts (8) in den anregbaren elektronischen Grundzustand überführt.

11. Verfahren nach einem der Ansprüche 1 bis 6, **dadurch gekennzeichnet, dass** das Anregungsverhinderungslicht (4) den anregbaren elektronischen Grundzustand des Luminophors (1) so stört, um ihn in den Schutzzustand zu überführen, dass der Luminophor (1) in dem Schutzzustand einen um mindesten einen Faktor (2) reduzierten Absorptionsquerschnitt für das Lumineszenzanregungslicht (7) aufweist.

12. Verfahren nach Anspruch 11, **dadurch gekennzeichnet, dass** der elektronische Grundzustand des Luminophors (1) durch Übertragung von Bewegungsimpulsen und/oder Schwingungen gestört wird.

13. Verfahren nach Anspruch 12, **dadurch gekennzeichnet, dass** die Bewegungsimpulse und/oder Schwingungen von einer mit dem Anregungsverhinderungslicht (4) angeregten Modulatoreinheit ausgehen.

14. Verfahren nach einem der Ansprüche 11 bis 13, **dadurch gekennzeichnet, dass** in dem gestörten elektronischen Grundzustand eine atomare Ordnung in dem Luminophor (1) gestört ist.

15. Verfahren nach einem der Ansprüche 11 bis 14, **dadurch gekennzeichnet, dass** sich der Luminophor (1) in dem gestörten elektronischen Grundzustand nicht in einem thermischen Gleichgewicht befindet.

## Claims

1. Method of high spatial resolution imaging a structure (2) of a sample (3), the structure (2) comprising a luminophore (1),
- wherein the sample (3), in a measurement area (5), is subjected to luminescence excitation light (7) which excites the luminophore (1) out of an excitable electronic ground state into an excited luminescent state;
- wherein the sample (3), in the measurement area (5), is subjected to an intensity distribution of luminescence de-excitation light (8) comprising a local minimum (9), which returns the luminophore (1) out of the excited luminescent state into the excitable electronic ground state;
- wherein luminescence light (10) emitted out of the measurement area (5) is registered; and
- wherein the registered luminescence light (10) is assigned to the position of the local minimum (9) within the sample (3);
**characterized in that** the sample (3), in the measurement area (5), prior to being subjected to the luminescence excitation light (7), is subjected to an intensity distribution of excitation inhibiting light (4) which transfers the luminophore (1) out of the excitable electronic ground state into a protection state in which the luminophore (1) is protected against electronic excitation by the luminescence excitation light (7) and by the luminescence de-excitation light (8), wherein the intensity distribution of the excitation inhibiting light (4) comprises a local minimum (6) which overlaps with the local minimum (9) of the intensity distribution of the luminescence de-excitation light (8).

2. Method of claim 1, **characterized in that** the luminescence excitation light (7), the luminescence de-excitation light (8) and the excitation inhibiting light (4) comprise different wavelengths.

3. Method of claim 1, **characterized in that** the luminescence de-excitation light (8) and the excitation inhibiting light (4) comprise same wavelengths.

4. Method of claim 3, **characterized in that** the luminescence de-excitation light (8) and the excitation inhibiting light (4) are simultaneously applied to the sample (3).

5. Method of any of the preceding claims, **characterized in that** the luminescence excitation light (7) is applied to the sample (3) in pulses, and that the excitation inhibiting light (4) and the luminescence de-excitation light (8) are independently applied to the sample (3) in pulses or continuously.

6. Method of claim 5, **characterized in that** the luminescence light (10) is registered at temporal resolution after each pulse of the luminescence excitation light (7).

7. Method of any of the preceding claims, **characterized in that** the excitation inhibiting light (4) transfers the luminophore (1) out of the excitable electronic ground state into the protection state by means of a change in conformation.

8. Method of any of the preceding claims, **characterized in that** the luminophore (1) is a luminophore (1) which can be switched off by means of the excitation inhibiting light (4).

9. Method of any of the preceding claims, **characterized in that** the luminophore (1) is a switchable fluorescent protein.

10. Method of any of the claims 7 to 9, **characterized in that** the sample (3), in the measurement area (5), prior to being subjected to the excitation inhibiting light (4), is subjected to an intensity distribution of excitation enabling light which transfers the luminophore (1), at least in the area of the local minimum (9) of the intensity distribution of the luminescence de-excitation light (8), into the excitable electronic ground state.

11. Method of any of the claims 1 to 6, **characterized in that** the excitation inhibiting light (4) disturbs the excitable electronic ground state of the luminophore (1), to transfer it into the protection state, in such a way that the luminophore (1) in the protection state has an absorption cross-section for the luminescence excitation light (7) which is reduced by at least a factor of 2.

12. Method of claim 11, **characterized in that** the electronic ground state of the luminophore (1) is disturbed by transfer of impulses and/or vibrations.

13. Method of claim 12, **characterized in that** the impulses and/or vibrations come from a modulator entity excited by the excitation inhibiting light (4).

14. Method of any of the claims 11 to 13, **characterized in that** an atomic order within the luminophore (1) is disturbed in the disturbed electronic ground state.

15. Method of any of the claims 11 to 14, **characterized in that** the luminophore (1), within the disturbed electronic ground state, is not in a thermal equilibrium.

## Revendications

1. Procédé de représentation à haute résolution spatiale d'une structure (2) d'un échantillon (3) comprenant un luminophore (1),
- l'échantillon (3) étant sollicité, dans une zone de mesure (5), avec une lumière d'excitation de luminescence (7), qui excite le luminophore (1) d'un état électronique de base excitable vers un état luminescent excité ;
- l'échantillon (3) étant sollicité, dans la zone de mesure (5), avec une répartition d'intensité d'une lumière de désexcitation de luminescence (8) comprenant un minimum local (9), qui ramène le luminophore (1) de l'état luminescent excité vers l'état électronique de base excitable ;
- la lumière de luminescence (10) émise à partir de la zone de mesure (5) étant enregistrée et
- la lumière de luminescence (10) enregistrée correspondant à la position du minimum local (9) dans l'échantillon (3),
**caractérisé en ce que** l'échantillon (3) est sollicité, dans la zone de mesure (5), avant la sollicitation avec la lumière d'excitation de luminescence (7), avec une répartition d'intensité d'une lumière d'inhibition de l'excitation (4), qui fait passer le luminophore de l'état électronique de base excitable à un état de protection dans lequel le luminophore (1) est protégé des excitations électroniques par la lumière d'excitation de luminescence (7) et la lumière de désexcitation de luminescence (8), la répartition d'intensité de la lumière d'inhibition de l'excitation (4) comprenant un minimum local (6) qui se superpose avec le minimum local (9) de la répartition d'intensité de la lumière de la lumière de désexcitation de luminescence (8).

2. Procédé selon la revendication 1, **caractérisé en ce que** la lumière d'excitation de luminescence (7), la lumière de désexcitation de luminescence (8) et la lumière d'inhibition de l'excitation (4) présentent des longueurs d'onde différentes.

3. Procédé selon la revendication 1, **caractérisé en ce que** la lumière de désexcitation de luminescence (8) et la lumière d'inhibition de l'excitation (4) présentent la même longueur d'onde.

4. Procédé selon la revendication 3, **caractérisé en ce que** la lumière de désexcitation de luminescence (8) et la lumière d'inhibition de l'excitation (4) sont appliquées ensemble sur l'échantillon (3).

5. Procédé selon l'une des revendications précédentes, **caractérisé en ce que** la lumière d'excitation de luminescence (7) est appliquée par impulsions sur l'échantillon (3) et **en ce que** la lumière d'inhibition de l'excitation (4) et la lumière de désexcitation (8) sont appliquées indépendamment entre elles par impulsion ou de manière continue sur l'échantillon (3).

6. Procédé selon la revendication 5, **caractérisé en ce que** la lumière de luminescence (10) est enregistrée avec une résolution temporelle après chaque impulsion de la lumière d'excitation de luminescence (7).

7. Procédé selon l'une des revendications précédentes, **caractérisé en ce que** la lumière d'inhibition de l'excitation (4) fait passer le luminophore (1), au moyen d'une modification de conformation, de l'état électronique de base excitable à l'état de protection.

8. Procédé selon l'une des revendications précédentes, **caractérisé en ce que** le luminophore (1) est un luminophore (1) pouvant être désactivé avec la lumière d'inhibition de l'excitation (4).

9. Procédé selon l'une des revendications précédentes, **caractérisé en ce que** le luminophore (1) est une protéine fluorescente commutable.

10. Procédé selon l'une des revendications 7 à 9, **caractérisé en ce que** l'échantillon (3) est sollicité, dans la zone de mesure (5), avant la sollicitation avec la lumière d'inhibition d'excitation (4), avec une répartition d'intensité d'une lumière de modification d'excitation, qui fait passer le luminophore (1), au moins au niveau du minimum local (9) de la répartition d'intensité de la lumière de désexcitation de luminescence (8), à l'état électronique de base excitable.

11. Procédé selon l'une des revendications 1 à 6, **caractérisé en ce que** la lumière d'inhibition d'excitation (4) perturbe l'état électronique de base excitable du luminophore (1), afin de le faire passer à l'état de protection, de façon à ce que le luminophore (1) présente, dans l'état de protection, une section d'absorption réduite d'au moins un facteur (2) pour la lumière d'excitation de luminescence (7).

12. Procédé selon la revendication 11, **caractérisé en ce que** l'état électronique de base du luminophore (1) est perturbé par la transmission d'impulsions de mouvement et/ou de vibrations.

13. Procédé selon la revendication 12, **caractérisé en ce que** les impulsions de mouvement et/ou les vibrations proviennent d'une unité de modulateur excitée avec la lumière d'inhibition d'excitation (4).

14. Procédé selon l'une des revendications 11 à 13, **caractérisé en ce que**, dans l'état électronique de base perturbé, une disposition atomique du luminophore (1) est perturbée.

15. Procédé selon l'une des revendications 11 à 14, **caractérisé en ce que**, dans l'état électronique de base perturbé, le luminophore (1) ne se trouve pas en équilibre thermique.
